# EUROPEAN PATENT SPECIFICATION

(11) **EP 3 666 828 B1**
(45) Date of publication and mention of the grant of the patent: **30.10.2024**
(21) Application number: 18843288.4
(22) Date of filing: 25.07.2018
(51) Int. Cl.: C08L 83/07, C08K 3/34, C08K 3/36, C08K 5/3475, C08L 83/05, C08L 83/04

(54) **ADDITION-CURABLE SILICONE COMPOSITION AND CURED SILICONE RUBBER**
ADDITIONSHÄRTBARE SILIKONZUSAMMENSETZUNG UND GEHÄRTETER SILIKONKAUTSCHUK
COMPOSITION DE SILICONE DURCISSABLE PAR ADDITION ET CAOUTCHOUC DE SILICONE DURCI

(30) Priority: 07.08.2017 JP 2017152347
(43) Date of publication of application: 17.06.2020
(73) Proprietor: Shin-Etsu Chemical Co., Ltd., Tokyo 100-0004 (JP)
(72) Inventor: ASHIDA, Ryo, Annaka-shi Gunma 379-0224 (JP); SHUDO, Shigeki, Annaka-shi Gunma 379-0224 (JP); MIZUSHIMA, Hidenori, Annaka-shi Gunma 379-0224 (JP)
(74) Representative: V.O.
(86) International application number: PCT/JP2018/027884
(87) International publication number: WO 2019/031245

(56) References cited:
- WO-A1-2015/053412
- JP-A- 2006 182 911
- JP-A- 2016 528 325
- JP-A- 2017 031 364
- JP-A- S6 456 766
- US-A1- 2007 135 538

## Description

### TECHNICAL FIELD

The present invention relates to an addition-curable silicone composition which has excellent storage stability and provides cured silicone rubber having excellent flame retardancy.

### BACKGROUND OF THE INVENTION

Silicone rubber is used in various fields because it has excellent heat resistance, weather resistance, electrical characteristics. Silicone rubber is flammable. Although it does not burn easily with approaching flame, it continues to burn once ignited. Therefore, various developments have been attempted to improve the flame retardancy of silicone rubber.

For example, Patent Literature 1 mentioned below describes that an addition reaction-curable liquid silicone rubber composition which contains aluminum hydroxide powder and zinc carbonate powder has excellent moldability and provides a molded silicone rubber product having excellent flame retardancy and electrical properties. Patent Literature 2 describes that a silicone rubber composition containing carbon black and aluminum hydroxide as a flame retardant provides silicone rubber having excellent fluidity, moldability, and curability, as well as flame retardancy. However, the liquid silicone rubber composition containing a basic inorganic filler such as aluminum hydroxide and zinc carbonate has the problem that a hydrosilyl group of the crosslinking agent undergoes dehydrogenation over time, resulting in thickening of the liquid silicone rubber composition.

Patent Literature 3 describes a method for improving flame retardancy by blending an organopolysiloxane resin, an inorganic filler such as silica, and an iron oxide fine powder in a liquid addition-curable silicone rubber composition so as to control the heat loss of the organohydrogenpolysiloxane. Patent Literature 4 describes an addition-curable silicone rubber composition which comprises a triazole type compound and an isocyanate type compound and provides cured silicone rubber having high flame retardancy without impairing the physical properties of the base silicone. However, these silicone rubber compositions still do not have sufficient flame retardancy.

WO2015053412 discloses a curable silicone composition comprising an organopolysiloxane having at least two silicon-bonded alkenyl groups per molecule, an organohydrogenpolysiloxane having at least two silicon-bonded hydrogen atoms per molecule, a triazole-based compound, a metal condensation catalyst and a hydrosilylation catalyst. The triazole is typically benzotriazole.

US2007135538 discloses a flame retardant composition comprising a thermoplastic resin, inorganic powder, benzotriazole and a silicone resin. **PRIOR ART LITERATURE**

### PATENT LITERATURE

[Patent Literature 1] Japanese Patent Application Laid-Open No. Hei9(1997)-316335
[Patent Literature 2] Japanese Patent Application Laid-Open No. 2004-161944
[Patent Literature 3] Japanese Patent Application Laid-Open No. 2014-040522
[Patent Literature 4] Japanese Patent Application Laid-Open No.2016-094514

### SUMMARY OF THE INVENTION

### PROBLEMS TO BE SOLVED BY THE INVENTION

Therefore, it has been desired to develop a silicone composition which provides silicone rubber having an excellent flame retardancy and an excellent storage stability.

The present invention has been made in view of the aforesaid circumstances. An object of the present invention is to provide an addition-curable silicone composition which provides silicone rubber which has excellent flame retardancy and is excellent in storage stability so that thickening due to dehydrogenation does not occur over time.

### MEANS TO SOLVE THE PROBLEMS

The present inventors conducted research and found that cured silicone rubber having high flame retardancy is obtained by adding a combination of (i) talc fine powder having a median diameter of 0.1 to 50 µm, as determined according to a laser diffraction method, and (ii) 1,2,3-benzotriazole, or a derivative thereof, in specific blending amounts to an addition-curable silicone rubber composition comprising an organopolysiloxane having an alkenyl group bonded to a silicon atom; an organohydrogenpolysiloxane; and a hydrosilylation catalyst.

When only either the talc fine powder or the 1,2,3-benzotriazole, or a derivative thereof, is added to an addition-curable silicone rubber composition, the effect of improving flame retardancy is insufficient and, in particular, silicone rubber having a flame retardancy of V-0 according to the UL94 Standards cannot be obtained. However, it has been found that a silicone rubber having excellent flame retardancy, in particular, having a flame retardancy of V-0 according to the UL94 Standards, is obtained by blending the combination of the talc fine powder with 1,2,3-benzotriazole, or a derivative thereof.

In addition, the silicone rubber composition has excellent storage stability.

That is, the present invention provides an addition-curable silicone composition comprising the following components (A) to (E):
(A) 100 parts by mass of an organopolysiloxane having two or more alkenyl groups each bonded to a silicon atom and being liquid at 25 degrees C,
(B) an organohydrogenpolysiloxane having two or more hydrogen atoms each bonded to a silicon atom in an amount such that the number of the hydrogen atoms each bonded to a silicon atom in component (B) is 1 to 10 per the alkenyl group bonded to a silicon atom in component (A),
(C) a platinum group metal catalyst in a catalytic amount,
(D) 10 to 100 parts by mass of talc fine powder having a median diameter of 0.1 to 50 µm, as determined according to a laser diffraction method, and
(E) 1,2,3-benzotriazole, or a derivative thereof, in an amount of 2 to 500 moles per mole of the platinum group metal atom of component (C). The present invention further provides silicone rubber obtained by curing the aforesaid addition-curable silicone composition.

### EFFECTS OF THE INVENTION

The present silicone composition is curable to provide silicone rubber having a flame retardancy of V-0 according to the UL94 Standards. The silicone composition shows less thickening over time and hence, has a high storage stability.

### DETAILED DESCRIPTION OF THE INVENTION

The present invention will be described below in detail.

### [(A) Organopolysiloxane]

Component (A) is an organopolysiloxane in a liquid state at 25 degrees C and has two or more alkenyl groups each bonded to a silicon atom in one molecule. Component (A) may be of, for example, a linear, cyclic or branched structure, and is preferably a linear diorganopolysiloxane in which the main chain consists basically of repeating diorganosiloxane units and both ends of the molecular chain are blocked by a triorganosiloxy group. It is preferable that the organopolysiloxane does not include a three-dimensional network (resin-like) structure. When the organopolysiloxane is linear or branched, either or both of the alkenyl groups may be bonded in the organopolysiloxane to a silicon atom at the end of the molecular chain to form a triorganosiloxy group (M units) or to a silicon atom at the middle of the molecular chain to form a bifunctional diorganosiloxane unit (D units) or a trifunctional monoorganosylsesquioxane unit (T units). Component (A) may be any known organopolysiloxane, and particularly preferred is a linear diorganopolysiloxane having alkenyl groups each bonded to the silicon atoms at least at both ends of the molecular chain.

Examples of the alkenyl group include those having 2 to 8 carbon atoms, preferably 2 to 4 carbon atoms, such as a vinyl, allyl, propenyl, butenyl, pentenyl, hexenyl, cyclohexenyl and heptenyl group. A vinyl group is particularly preferable. The number of the alkenyl group in component (A) is preferably 0.001 to 10%, particularly preferably about 0.01 to 5%, based on the total number of the monovalent hydrocarbon group each bonded to a silicon atom.

Examples of the monovalent organic group, other than an alkenyl group, bonded to a silicon atom of the organopolysiloxane include monovalent hydrocarbon groups having 1 to 12 carbon atoms, preferably 1 to 10 carbon atoms. The examples include alkyl groups such as a methyl, ethyl, propyl, butyl, pentyl, hexyl, cyclohexyl, and heptyl group; aryl groups such as a phenyl, tolyl, xylyl, and naphthyl group; and aralkyl groups such as a benzyl and phenethyl group. Particularly, a methyl group is preferred.

The viscosity of component (A) at 25 degrees C is preferably in the range from 100 to 500,000 mPa·s, in particular in the range from 1,000 to 200,000 mPa·s. When the viscosity is within this range, the handling of the composition and the mechanical properties of the cured silicone rubber are good. The viscosity of component (A) is determined by a rotational viscometer according to the Japanese Industrial Standards (JIS) K 7117-1:1999.

Examples of the afore-mentioned organopolysiloxane include a dimethylsiloxane/methylvinyl siloxane copolymer whose both terminals are blocked with a trimethylsiloxy group, a methylvinyl polysiloxane whose both terminals are blocked with a trimethylsiloxy group, a dimethylsiloxane/methylvinyl siloxane/methylphenylsiloxane copolymer whose both terminals are blocked with a trimethylsiloxy group, a dimethyl polysiloxane whose both terminals are blocked with a dimethylvinylsiloxy group, a methylvinyl polysiloxane whose both terminals are blocked with a dimethylvinylsiloxy group, a dimethylsiloxane/methylvinyl siloxane copolymer whose both terminals are blocked with a dimethylvinylsiloxy group, a dimethylsiloxane/methylvinylsiloxane/methylphenyls iloxane copolymer whose both terminals are blocked with a dimethylvinylsiloxy group, a dimethylpolysiloxane whose both terminals are blocked with a divinylmethylsiloxy group, a dimethylsiloxane/methylvinylsiloxane copolymer whose both terminals are blocked with a divinylmethylsiloxy group, dimethylpolysiloxane whose both terminals are blocked with a trivinylsiloxy group, and a dimethylsiloxane/methylvinylsiloxane copolymer whose both terminals are blocked with a trivinysiloxy group. Two or more of these organopolysiloxanes may be used in combination.

### [(B) Organohydrogenpolysiloxane]

Component (B) is an organohydrogenpolysiloxane having at least two hydrogen atoms each bonded to a silicon atom (SiH group) in one molecule. This is reactive with an alkenyl group in component (A) to cause to hydrosilylation and functions as a crosslinking agent (curing agent). The organohydrogenpolysiloxane may be any known compound and, preferably, have substantially no hydroxyl group bonded to a silicon atom (i.e., silanol group) in the molecule. The organohydrogenpolysiloxane may be used alone or in combination of two or more kinds. In the present invention, the term "SiH group" refers to a hydrosilyl group.

The organohydrogenpolysiloxane may be a compound represented by the following average composition formula (1).

R¹ₐH_{b}SiO_{(4-a-b)/2} (1)

In the formula (1), R¹ is, independently of each other, an unsubstituted or substituted monovalent hydrocarbon group, preferably having 1 to 10 carbon atoms, provided that it does not have an aliphatic unsaturated bond such as an alkenyl group. Examples of the unsubstituted or substituted monovalent hydrocarbon groups include alkyl groups such as a methyl, ethyl, propyl, isopropyl, butyl, isobutyl, tert-butyl, pentyl, neopentyl, hexyl, cyclohexyl, octyl, nonyl, and decyl group; aryl groups such as a phenyl, tolyl, xylyl and naphthyl group, and aralkyl groups such as a benzyl, phenyl ethyl and phenylpropyl group. Among these, an alkyl group or an aryl group is preferable, and a methyl group is further preferable. Further, a is a positive number of 0.7 to 2.1, b is a positive number of 0.001 to 1.0, and a+b is a number of 0.8 to 3.0. Preferably, a is a positive number of 1.0 to 2.0, b is a positive number of 0.01 to 1.0, and a+b is number in the range of 1.5 to 2.5.

The organohydrogenpolysiloxane has at least two (usually 2 to 200), preferably three or more (e.g., 3 to 100), more preferably 4 to 50, SiH groups per molecule. The SiH groups may be located at the end of the molecular chain or in the middle of the molecular chain, or may be located at both of them. The molecular structure of the organohydrogenpolysiloxane may be linear, cyclic, branched or three-dimensional network. The number of silicon atoms in one molecule, or the degree of polymerization, is usually from 2 to 300, preferably from 3 to 150, more preferably from 4 to 100. For instance, the degree of polymerization is determined as the number average degree of polymerization (number average molecular weight) by gel permeation chromatography (GPC) analysis using toluene as a developing solvent and reduced to polystyrene.

The viscosity of component (B) at 25 degrees C is usually from 0.1 to 1,000 mPa·s, preferably from 0.5 to 500 mPa·s. Component (B) is preferably liquid at 25 degrees C. The viscosity is determined by a rotary viscometer according to JIS K 7117-1:1999.

Examples of the organohydrogenpolysiloxane include 1,1,3,3-tetramethyldisiloxane, 1,3,5,7-tetramethylcyclosiloxane, tris(hydrogendimethylsiloxy)methylsilane, tris(hydrogendimethylsiloxy)phenylsilane, methylhydrogenecyclopolysiloxane, methylhydrogensiloxane/dimethylsiloxane cyclic copolymer, a methylhydrogenpolysiloxane whose both terminals are blocked with a trimethylsiloxy group, a dimethylsiloxane/methylhydrogensiloxane copolymer whose both terminals are blocked with a trimethylsiloxy group, a dimethylsiloxane/methylhydrogensiloxane/methylphen ylsiloxane copolymer whose both terminals are blocked with a trimethylsiloxy group, a dimethylsiloxane/methylhydrogensiloxane/diphenylsi loxane copolymer whose both terminals are blocked with a trimethylsiloxy group, a methylhydrogenpolysiloxane whose both terminals are blocked with a dimethylhydrogensiloxy group, a dimethylpolysiloxane whose both terminals are blocked with a dimethylhydrogensiloxy group, dimethylsiloxane/methylhydrogensiloxane copolymer whose both terminals are blocked with a dimethylhydrogensiloxy group, a dimethylsiloxane/methylphenylsiloxane copolymer whose both terminals are blocked with a dimethylhydrogensiloxy group, a dimethylsiloxane/diphenylsiloxane copolymer whose both terminals are blocked with a dimethylhydrogensiloxy group, a methylphenylpolysiloxane whose both terminals are blocked with a dimethylhydrogensiloxy group, and a diphenylpolysiloxane whose both terminals are blocked with a dimethylhydrogensiloxy group; and those in which some or all of the methyl groups of the aforesaid compounds are substituted with other alkyl groups such as an ethyl group and a propyl groups; organosiloxane copolymers composed of a siloxane unit represented by R²₃SiO_{1/2}, a siloxane unit represented by R²₂HSiO_{1/2} and a siloxane unit represented by SiO_{4/2}; organosiloxane copolymers composed of a siloxane unit represented by R²₂HSiO_{1/2} and a siloxane unit represented by SiO_{4/2}; and organosiloxane copolymers composed of a siloxane unit represented by R²HSiO_{2/2} and a siloxane unit represented R²SiO_{3/2} or a siloxane unit represented by HSiO_{3/2}, wherein R² is a monovalent hydrocarbon group other than an alkenyl group and a group as defined for R¹ above. Two or more of these organohydrogenpolysiloxanes may be used in combination.

The amount of component (B) is such that the ratio of the number of the hydrogen atom bonded to the silicon atom in component (B), relative to the number of the alkenyl groups bonded to the silicon atom in component (A) is in the range of 1 to 10, preferably 1.5 to 5. If the amount of component (B) is less than the aforesaid lower limit, the composition may not sufficiently cure. If the amount exceeds the aforesaid upper limit, the heat resistance of the cured silicone rubber may deteriorate extremely.

### [(C) Platinum group metal catalyst]

The platinum group metal catalyst may be a conventional one. Examples include platinum catalysts, palladium catalysts, and ruthenium catalysts. Among them, platinum-based catalysts are preferable, such as platinum black, platinum (II) chloride, chloroplatinic acid, complexes of chloroplatinic acid and a monohydric alcohol, complexes of chloroplatinic acid and olefins, and platinum bisacetoacetate. The amount of the platinum group metal catalyst may be a catalytic amount effective to promote the addition reaction of components (A) and (B). Generally, the amount of the catalyst is about 1 to 1,000 ppm by mass as a platinum group metal, particularly about 1 to 500 ppm by mass, based on the total mass of components (A) and (B). An excessively small amount of the catalyst causes decreased curability, and an excessively large amount of the catalyst is economically disadvantageous.

### [(D) Talc fine powder]

The talc fine powder is an inorganic powder known as a heat resistance improving agent (non-reinforcing filler). If talc fine powder only is blended in an addition-curable silicone composition, the flame retardancy improvement effect is not sufficiently attained, so that silicone rubber having a flame retardancy of V-0 according to the UL94 Standards cannot be obtained. In contrast, when the talc fine powder is blended in combination with (E) 1,2,3-benzotriazole, or a derivative thereof as described later, silicone rubber has excellent flame retardancy (in particular, flame retardancy of V-0 according to the UL94 Standards). Furthermore, the composition does not cause thickening due to dehydrogenation over time and is thus, excellent in storage stability. The median diameter of the talc fine powder, as determined by a laser diffraction method, is 0.1 to 50 µm, preferably 5 to 40 µm. If the median diameter is larger than the aforesaid upper limit, the mechanical properties of the silicone composition may be lower. If the median diameter is smaller than the aforesaid lower limit, the viscosity of the silicone composition may be higher, so that the workability may deteriorate. The talc fine powder having the afore-mentioned median diameter may be used alone, or two or more of such talc fine powder may be used in combination.

The afore-mentioned talc fine powder may be one which is not surface treated, but is preferably surface treated with an organosilicon compound which will be described below. The talc fine powder surface-treated with the organosilicon compound has an improved affinity with the silicone resin to lower the viscosity of the composition, so that the handling is easier.

The manner for the surface treatment of the talc fine powder is not particularly limited. For example, the untreated talc fine powder and the organosilicon compound are put in a sealed mechanical-kneading apparatus at an atmospheric pressure or in a fluidized bed, and mixed at room temperature (25 degrees C) or under heating, if needed, in the presence of an inert gas. Optionally, water or a catalyst, as a hydrolysis accelerator, may be used to accelerate the surface treatment. After the mixing, the mixture is dried to obtain surface-treated talc fine powder. The amount of the organosilicon compound may be an amount calculated from the area to be coated by the surface treatment agent or more. Generally, the amount of the organosilicon compound may be 0.1 to 20 parts by mass, preferably 0.1 to 15 parts by mass, more preferably 0.1 to 10 parts by mass, relative to 100 parts by mass of the talc fine powder before treatment.

Examples of the organosilicon compound include silazanes such as hexamethyldisilazane and 1,1,3,3,5,5-hexamethylcyclotrisilazane; alkoxysilanes such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, and chloropropyltrimethoxysilane; chlorosilanes such as trimethylchlorosilane and dimethyldichlorosilane; silane coupling agents such as trimethylsilanol and hydroxypentamethyldisiloxane; polymethylsiloxane; and organohydrogenpolysiloxanes. However, it is preferable that the organosilicon compound is different from aforementioned components (A) and (B).

The amount of component (D) is 10 to 100 parts by mass, preferably 20 to 90 parts by mass, more preferably 30 to 80 parts by mass, relative to 100 parts by mass of component (A). If the amount of component (D) is less than the afore-mentioned lower limit, a sufficient effect of improving flame retardancy cannot be obtained. If the amount is more than the afore-mentioned upper limit, the viscosity of the silicone composition is higher and the workability deteriorates.

### [(E)1,2,3-Benzotriazole or a derivative thereof]

Component (E) is 1,2,3-benzotriazole, or a derivative thereof, and acts as a flame retardancy-improving material. Although it is not possible to impart adequate flame retardancy to silicone rubber by incorporating only 1,2,3-benzotriazole, or a derivative thereof, in an addition-curable silicone composition, it is possible to prepare silicone rubber having excellent flame retardancy, that is, flame retardancy of V-0 according to the UL94 Standards, by incorporating component (E) in combination with the talc fine powder (D) described above. In the present invention, a 1,2,3-benzotriazole derivative is a compound in which a hydrogen atom bonded to a carbon or nitrogen atom in 1,2,3-benzotriazole is replaced with a monovalent organic group; a compound in which a substituted or unsubstituted monovalent hydrocarbon group is bonded to at least one carbon atom of 1,2,3-benzotriazole; or a compound in which a substituted or unsubstituted monovalent hydrocarbon group, an alkoxysilylalkyl group, or an organosiloxysilylalkyl group is bonded to a nitrogen atom of 1,2,3-benzotriazole via a carbonyl group, an amide bond, or an ester bond.

The 1,2,3-benzotriazole, or a derivative thereof, is preferably represented by the following formula (2).

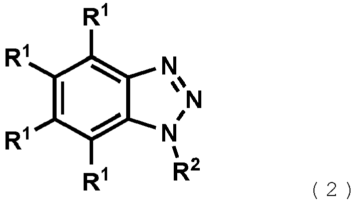

In the formula (2), R¹ is, independently of each other, a hydrogen atom or a substituted or unsubstituted monovalent hydrocarbon group having 1 to 10 carbon atoms, preferably 1 to 6 carbon atoms. Examples of the monovalent hydrocarbon groups include alkyl groups such as a methyl, ethyl, propyl, isopropyl, butyl, isobutyl, tert-butyl, pentyl, neopentyl, hexyl, and cyclohexyl group, and those in which a part or all of the hydrogen atoms are substituted with a halogen atom such as fluorine, bromine and chlorine or a cyano group, for example, a chloromethyl group, chloropropyl group, bromoethyl group, trifluoropropyl group, and cyanoethyl group. Among these, R¹ is preferably a hydrogen atom and, particularly, all of R¹ are a hydrogen atom.

R² is a hydrogen atom or a substituted or unsubstituted monovalent hydrocarbon group having 1 to 20 carbon atoms, preferably 1 to 14 carbon atoms, more preferably 1 to 10 carbon atoms, which may have a heteroatom, and may have an alkoxysilyl group or an organosiloxysilyl group at the terminal. Examples of the monovalent hydrocarbon group include an alkyl group such as a methyl, ethyl, propyl, isopropyl, butyl, isobutyl, tert-butyl, pentyl, neopentyl, hexyl and cyclohexyl group, and those in which a part or all of the hydrogen atoms of these groups are substituted with a halogen atom such as fluorine, bromine and chlorine or a cyano group, for example, a chloromethyl group, chloropropyl group, bromoethyl group, trifluoropropyl group and cyanoethyl group. Examples of the group having a heteroatom include a radical having an ether bond or a carbonyl group. Further, examples of the group having a heteroatom include a monovalent hydrocarbon group having a keto group, an amide group and a carboxy group. For instance, compounds in which a monovalent hydrocarbon group is bonded to a nitrogen atom of benzotriazole via a keto group, an amide group, or a carboxy group are included. Examples of the compound having an alkoxysilyl group or an organosiloxysilyl group at the terminal include compounds in which an alkoxysilylalkyl group or an organosiloxysilylalkyl group is bonded to a nitrogen atom of benzotriazole via a keto group, an amide group, or a carboxy group.

For instance, the group having a keto group, an amide group, or a carboxy group is represented by the following formula (3), (4) or (5). 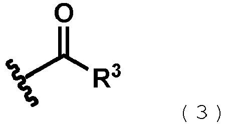 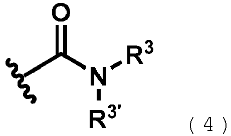 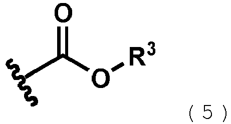 In the formulae (3) to (5), R³ and R³' are, independently of each other, a hydrogen atom, a monovalent hydrocarbon group, such as an alkyl group, having 1 to 10 carbon atoms, or -(CH₂)ₚ-Si(OR⁴)₃. R⁴ is an alkyl group having 1 to 4 carbon atoms or an Si(R⁵)₃ group, R⁵ is an alkyl group having 1 to 3 carbon atoms. R⁴ is preferably a methyl group. p is an integer of 1 to 6, preferably an integer of 1 to 3. Examples of the monovalent hydrocarbon group include those described above.

The benzotriazole derivative having the group represented by the above formula (3), (4) or (5) is represented by the following formula (3'), (4') or (5'). 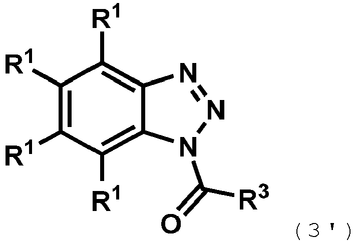 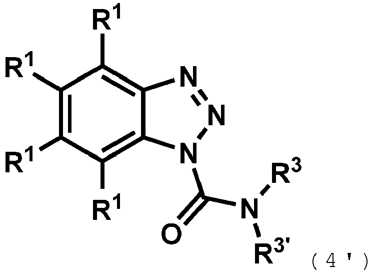 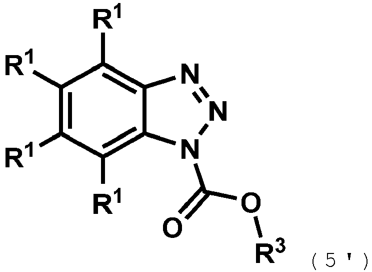 In the above formulae, R¹, R³ and R³' are as defined above. Further preferably, all of R¹ are a hydrogen atom. R³ is preferably -(CH₂)ₚ-Si(OR⁴)₃. Preferably, R³' is a hydrogen atom. R⁴ and p are as defined above. Preferably, R⁴ is a methyl group and p is an integer of from 1 to 3.

Component (E) is particularly preferably 1,2,3-benzotriazole in which both R¹ and R² in formula (2) are a hydrogen atom, or benzotriazole derivatives represented by any one of the formulae (3') to (5'). As the benzotriazole derivative, a compound represented by the following formula is more preferable. 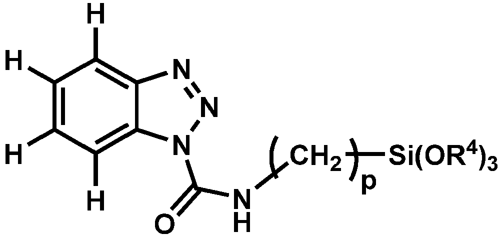 In the formula, R⁴ and p are as defined above. Preferably, R⁴ is a methyl group. p is an integer of from 1 to 3, preferably 3.

The amount of component (E) is 2 to 500 mol, preferably 2.5 to 300 mol, more preferably 3 to 200 mol, and particularly 4 to 100 mol, per mol of the platinum group metal atoms of component (C). If the amount of component (E) is less than the afore-mentioned lower limit, a sufficient effect of improving flame retardancy cannot be obtained. If the amount exceeds the afore-mentioned upper limit, the composition may not cure.

### [(F) Reinforcing filler]

The silicone composition of the present invention preferably further contains (F) reinforcing filler. As the reinforcing filler, reinforcing silica fine powder is preferable. Any conventional reinforcing silica fine powder may be used, such as those used as a reinforcing agent for rubber in conventional compositions to be cured into silicone rubber. Type of silica is not particularly limited. The reinforcing silica fine powder preferably has a specific BET surface area of 50 m²/g or more. In particular, precipitated silica (wet silica), fumed silica (dry silica) and calcined silica which have a specific BET surface area of 50 to 400 m²/g, preferably 100 to 350 m²/g are suitably used. Fumed silica is particularly preferred in view of improving rubber strength. The reinforcing silica fine powder may be hydrophobically treated with a surface treatment agent such as an organosilicon compound. Examples of the organosilicon compound include chlorosilane, alkoxysilane and organosilazane compounds which are generally hydrolyzable. In the surface treatment, the silica fine powder in a powder state may be subjected to hydrophobic treatment with a surface treatment agent prior to being mixed with the resin, or the surface treatment agent may be added when mixing the alkenyl group-containing organopolysiloxane (A) with the silica fine powder, to prepare the hydrophobically-treated silica fine powder.

A method for the surface treatment may be any known method. For example, the untreated silica fine powder and the surface treatment agent are put in a sealed mechanical-kneading apparatus at an atmospheric pressure or in a fluidized bed and are mixed at room temperature or under heating, if needed, in the presence of an inert gas. Optionally, a catalyst, as a hydrolysis accelerator, may be used to accelerate the surface treatment. After the mixing, the mixed material is dried to provide the surface-treated silica fine powder. The amount of the treatment agent may be calculated from the area to be coated by the treatment agent or more.

Examples of the surface treatment agent are as described above for the surface treatment agent for the talc fine powder (D). Silazanes are particularly preferable as the surface treatment agent.

The amount of component (F) is 1 to 100 parts by mass, preferably 5 to 60 parts by mass, more preferably 10 to 60 parts by mass, relative to 100 parts by mass of component (A). If the amount is less than the afore-mentioned lower limit, a sufficient reinforcing effect cannot be obtained. If the amount exceeds the afore-mentioned upper limit, the viscosity of the silicone composition is too high to thus, deteriorate the workability and processability.

The silicone composition of the present invention may further comprise other optional components in addition to components (A) to (F), as long as the purpose of the present invention is not hindered. One or more of other components may be used. For example, flame retardancy improving materials other than components (D) and (E), such as carbon black, titanium dioxide and iron oxide may be used. The amount of the flame retardancy improving material other than components (D) and (E) is preferably 0 to 10 parts by mass, especially 0.1 to 5 parts by mass, relative to 100 parts by mass of component (A).

Additionally, there may be blended, for example, an organopolysiloxane having one hydrogen atom bonding to a silicon atom in one molecule and having no other functional group, an organopolysiloxane having one alkenyl group bonding to a silicon atom in one molecule and having no other functional group, a non-functional organopolysiloxane having no hydrogen atom bonding to a silicon atom, no alkenyl group bonding to a silicon atom and no other functional group, i.e., so-called dimethyl silicone oil, an organic solvent, a creep hardening inhibitor, a plasticizer, a thixotropic agent, a pigment, a dye, and a fungicide. The amount of the aforesaid additives may be appropriately adjusted, as long as the effects of the present invention are not impaired.

The method for preparing the present addition-curable silicone composition is not particularly limited. Preferably, the components are stored as two separate liquids so that the curing does not proceed. The two separate liquids are mixed together at the time of use (immediately before curing) to allow curing. In this case, components (B) and (C) are preferably separated from each other, because crosslinking may proceed, even at room temperature, and the composition may thicken or gel if components (A), (B) and (C) are stored in one liquid. For example, a part of component (A), a part of component (D), component (C) and, optionally, component (F) are mixed and stored as material A. The remaining part of component (A), component (B), the remaining part of component (D), component (E) and, optionally, component (F) are mixed and stored as material B. Material A and material B are mixed immediately before curing. It is preferable to incorporate a reaction control agent such as acetylene alcohol in material B. The reaction control agent delays the curing, so that it is possible to secure a time for mixing materials A and B and a time for molding. The silicone composition of the present invention is liquid at 25 degrees C. Preferably, the silicone composition has a viscosity of 1,000 mPa·s to 5,000,000 mPa·s at 25 degrees C. When the silicone composition comprises component (F), the viscosity at 25 degrees C is 10,000 mPa·s to 10,000,000 mPa·s. The viscosity is determined, for example, by a viscosity-viscoelasticity measuring device (HAKKE MARS40, ex Thermo Fisher Scientific Co., Ltd.).

The method for molding and the method for curing the addition-curable silicone composition are not particularly limited, and may be any conventional methods. The molding may be done with an optimal means suitable for the purpose, such as injection molding, transfer molding, pouring molding and compression molding. Curing conditions may be heating at 80 to 230 degrees C, preferably 100 to 180 degrees C. The heating time is preferably about 30 seconds to 3 hours, particularly about 1 minute to 1 hour. Further, if needed, secondary vulcanization (post-cure) may be done at 40 to 230 degrees C for about 10 minutes to 24 hours. The thickness of the cured silicone rubber is not particularly limited, but is preferably 0.5 to 10 mm, particularly 1 to 6 mm.

The cured silicone rubber having the aforementioned thickness shows particularly excellent flame retardancy. In particular, a cured silicone rubber having a thickness of 0.5 mm or more, preferably 1 mm or more, shows a flame retardancy of V-0 in a flame retardancy test according to the UL94 Standards. In the flame retardancy test according to the UL94 Standards, for example, a strip of the cured silicone rubber having a thickness of 1mm is used as a test piece. A burner flame is applied to the bottom end of the vertically supported test piece to allow the silicone rubber to burn. The flame retardancy is evaluated by the proceeding rate of the burning (called a vertical burning test). The flame retardancy of V-0 means that a burner flame is applied twice; burning with flame continues for at most 10 seconds after the burner is moved away both in the first and second flame contacts; the total of the time of the burning with flame and the time of the flame-free burning in the second flame contact is at most 30 seconds; and the total of the time of the burning with flame of the five test pieces is at most 50 seconds.

The silicone composition of the present invention is excellent in storage stability and provides cured silicone rubber having excellent flame retardancy, so that the silicone composition is useful for electric appliances, cable terminal parts and automobile materials, which require flame retardancy.

### EXAMPLES

The present invention will be explained below in further detail with reference to a series of Examples and Comparative Examples, though the present invention is in no way limited by these Examples.

In the following description, the term "part" refers to "part by mass". An average degree of polymerization means a number average degree of polymerization which is determined by gel permeation chromatography, i.e., GPC, with toluene as a developing solvent, and is reduced to polystyrene.

Components (A) to (D) used in the following Examples and Comparative Examples are as follows.

### (A) Organopolysiloxane in a liquid state at 25 degrees C.

(A1) Dimethylpolysiloxane having both ends each blocked by a vinyl dimethylsiloxy group, and having a viscosity of 30,000 mPa·s at 25 degrees C.
(A2) Dimethyl/vinylmethylpolysiloxane having a viscosity of 700 mPa·s at 25 degrees C and represented by the following formula: Me₃SiO-[ViMeSiO]ₙ-[Me₂SiO]ₘ-SiMe₃
   wherein Me is a methyl group, Vi is a vinyl group, n and m satisfying the equation, n/m=5/95 (mol %), and the siloxane units in the parentheses are not necessarily bonded in the above-described order.

### (B) Organohydrogenpolysiloxane

Methylhydrogenpolysiloxane having both ends each blocked by a trimethylsiloxy group and having SiH groups in the side chains, that is, a dimethylsiloxane/methylhydrogensiloxane copolymer whose both terminals are blocked with a trimethylsiloxy group and which has an average polymerization degree of 40, viscosity of 18 mPa·s, and an SiH group content of 0.0074 mol/g.

### (C) Platinum catalyst

A solution of a complex of platinum and 1,3-divinyl-1,1,3,3-tetramethyldisiloxane in toluene, containing 1% by weight of platinum atoms.

### (D) Talc fine powder

(D1) Talc fine powder having a median diameter of 30 µm, ex Nippon Talc Corporation, trade name, PAOG-R.
(D2) Surface-treated talc fine powder prepared as follows.

100 Parts of the talc fine powder PAOG-R were put into a Henschel mixer and stirred, to which 5 parts of methyltrimethoxysilane, trade name, KBM-13, ex Shin-Etsu Chemical Co., Ltd., was sprayed with stirring and, then, the powder was subjected to a heat treatment at 150 degrees C for 2 hours to obtain surface-treated talc (D2).

### [EXAMPLE 1]

### (Preparation of Material A)

100 Parts of organopolysiloxane (A1), 5 parts of organopolysiloxane (A2) and 70 parts of talc fine powder (D1) were mixed and stirred for 15 minutes. Then, to the mixture, 0.60 parts of platinum catalyst (C) was added and stirred for 10 minutes.

### (Preparation of Material B)

100 Parts of organopolysiloxane (A1), 5 parts of organopolysiloxane (A2), 4.08 parts of methylhydrogenpolysiloxane (B), which amounts give a molar ratio of the SiH group to the vinyl group (SiH/Vi) of 2.2 mol/mol in a mixture of materials A and B in a mass ratio of 1:1, 70 parts of talc fine powder (D1), and 0.24 parts of ethynylcyclohexanol as a reaction control agent were mixed and stirred for 15 minutes. Next, 0.24 parts of a 10% solution of 1,2,3-benzotriazole in ethanol (E1) was added, which amounts give a molar ratio of 6.9 mol per mol of platinum atom in a mixture of materials A and B in a mass ratio of 1:1, followed by stirring for 10 minutes.

### (Preparation of an addition-curable silicone composition and curing thereof)

Material A and material B were mixed in a mass ratio of 1:1 for 10 minutes to prepare a homogenous silicone composition which was liquid at a temperature of 25 degrees C. Next, the silicone composition was subjected to pre-curing at 120 degrees C for 10 minutes to obtain a cured silicone rubber sheet having dimensions of 130mm×170mm×1.0mm. The sheet was subjected to a flame retardancy test according to the UL-94 Standards. The result is as shown in Table 1.

Besides, for each of materials A and B, the viscosity immediately after the preparation and the viscosity after being stored in a sealed container in a dry box at 70 degrees C for two weeks were determined. The viscosities were determined at a shear rate of 0.9 s⁻¹ at 25 degrees C with a HAKKE MARS40, ex Thermo Fisher Scientific Co., Ltd. The results are as shown in Table 1.

### [Preparation Example 1]

60 Parts of organopolysiloxane (A1), 8 parts of hexamethyldisilazane, 2 parts of water and 40 parts of silica fine powder (F), Aerosil 300, having a BET specific surface area of 300m²/g, were put into a kneader, and mixed at room temperature for 1 hour. Thereafter, the temperature was raised to 150 degrees C, followed by further mixing for 2 hours. Then, the temperature was lowered to room temperature, and 25 parts of organopolysiloxane (A1) and 5 parts of organopolysiloxane (A2) were added to the mixture and further mixed until the mixture became homogenous to obtain base compound (I).

### [EXAMPLE 2]

### (Preparation of Material A)

To 130 parts of the base compound (I) obtained in the aforesaid Preparation Example 1, were added 19 parts of organopolysiloxane (A1) and 30 parts of talc fine powder (D1) and stirred for 15 minutes. Then, 0.60 parts of platinum catalyst (C) was added and stirred for 10 minutes.

### (Preparation of Material B)

To 130 parts of the base compound (I) prepared in the aforesaid Preparation Example 1, 15 parts of organopolysiloxane (A1), were added 4.4 parts of methylhydrogenpolysiloxane (B), which amounts give a molar ratio of the SiH group to the vinyl group (SiH/Vi) of 2.3 mol/mol in a mixture of materials A and B in a mass ratio of 1:1, 30 parts of talc fine powder (D1), and 0.24 parts of ethynylcyclohexanol as a reaction control agent and stirred for 15 minutes. Next, 0.24 parts of a 10% solution of 1,2,3-benzotriazole in ethanol (E1) was added, which amount gives a molar ratio of 6.9 mol per mol of platinum atom in a mixture of materials A and B in a mass ratio of 1:1, and the mixture was further stirred for 10 minutes.

### (Preparation of an addition-curable silicone composition and curing thereof)

Material A and material B were mixed in a mass ratio of 1:1 for 10 minutes to prepare a homogeneous silicone composition which was liquid at a temperature of 25 degrees C. The same manner in Example 1 was repeated to obtain a cured silicone rubber sheet. The sheet was subjected to a vertical flame retardancy test according to the UL-94 Standards.

Besides, as in Example 1, the viscosity immediately after the preparation and the viscosity after being stored at 70 degrees C for 2 weeks were determined for each of Materials A and B.

The results are as shown in Table 1.

### [EXAMPLE 3]

The procedures in Example 2 were repeated to obtain a silicone composition, except that the surface treated talc (D2) was used instead of the talc fine powder (D1). Then, a cured silicone rubber sheet was obtained as in Example 2.

### [EXAMPLE 4]

The procedures in Example 2 were repeated to obtain a silicone composition, except that the surface treated talc (D2) was used instead of the talc fine powder (D1), and 0.08 parts by mass of the following benzotriazole derivative (E2), which amount gives a molar ratio of 8.1 mol per mol of platinum atoms in a mixture of materials A and B in a weight ratio of 1:1, was used instead of the 10% solution of 1,2,3-benzotriazole in ethanol (E1). Then a silicone rubber hardened sheet was obtained as in Example 2.

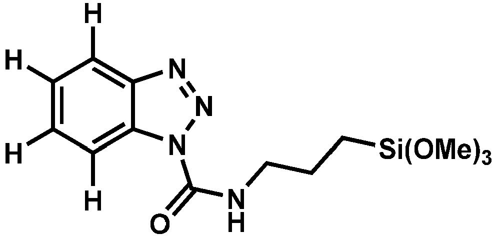

### [EXAMPLE 5]

The procedures in Example 4 were repeated to obtain a silicone composition, except that the amount of benzotriazole derivative (E2) was changed to 4.7 parts by mass, which amount gives a molar ratio of 475.0 mol per mol of platinum atom in a mixture of materials A and B in a mass ratio of 1:1. Then, a cured silicone rubber sheet was obtained as in Example 2.

### [Comparative Example 1]

The procedures in Example 1 were repeated to obtain a silicone composition, except that the talc fine powder (D) was not blended. Then, a cured silicone rubber sheet was obtained as in Example 1.

### [Comparative Example 2]

The procedures in Example 2 were repeated to obtain a silicone composition, except that the talc fine powder (D) was not blended. Then, a cured silicone rubber sheet was obtained as in Example 2.

### [Comparative Example 3]

The procedures in Example 2 were repeated to obtain a silicone composition, except that the 10% solution of 1,2,3-benzotriazole in ethanol (E) was not blended. Then, a cured silicone rubber sheet was obtained as in Example 2.

### [Comparative Example 4]

The procedures in Example 2 were repeated to obtain a silicone composition, except that 3.8 parts of a 50% solution of 1,2,3-benzotriazole (E) in ethanol was used, which amount gives a molar ratio of 550 moles per mole of platinum atoms in a mixture of materials A and B in a mass ratio of 1:1, instead of the 10% solution of 1,2,3-benzotriazole (E) in ethanol. The silicone composition was heated in the same conditions as in Example 1, but did not cure.

### [Comparative Example 5]

The procedures in Example 2 were repeated to obtain a silicone composition, except that aluminum hydroxide fine powder (ex Showa Denko Co., Ltd., trade name, Heidilight H-32) was used instead of talc fine powder (D), and 0.5 parts of carbon black (ex, Electrochemical Industry, trade name, Denca Black) was added to Material B. Then, a cured silicone rubber sheet was obtained as in Example 2.

The cured silicone rubber sheets obtained in Examples 3 to 5 and Comparative Examples 1 to 5 were subjected to the flame retardancy test in the same manner as in Example 1. The viscosity immediately after the preparation and the viscosity after being stored at 70 degrees C for 2 weeks were determined according to the aforedescribed manner, for each of Materials A and B in the Examples and the Comparative Examples. The results are as shown in Table 1.

**Table 1**

| | | | Ex. 1 | Ex. 2 | Ex. 3 | Ex. 4 | Ex. 5 | Com. Ex. 1 | Com. Ex. 2 | Com. Ex. 3 | Com. Ex. 4 | Com. Ex. 5 |
|---|---|---|---|---|---|---|---|---|---|---|---|---|
| Inorganic powder | | | Talc fine powder (D1) | | Surface-treated talc fine powder (D2) | | | - | - | Talc fine powder (D1) | | Aluminum hydroxide fine powder |
| Parts of the inorganic powder relative to 100 parts of component (A) | | | 67 | 30 | 30 | 30 | 30 | 0 | 0 | 30 | 30 | 30 |
| Mole of component (E) per mole of platinum atom | | | 6.9 | 6.9 | 6.9 | 8.1 | 475 | 6.9 | 6.9 | 0 | 550 | 6.9 |
| Viscosity, Pa·s | Material A | Immediately after preparation | 120 | 1080 | 720 | 720 | 720 | 30 | 1080 | 1060 | 1080 | 980 |
| | | 70 degrees C x two weeks after | 140 | 1150 | 750 | 750 | 750 | 30 | 1080 | 1140 | 1080 | 1100 |
| | Material B | Immediately after preparation | 115 | 1020 | 740 | 770 | 2700 | 28 | 1020 | 1010 | 1050 | 1080 |
| | | 70 degrees C x two weeks after | 133 | 1180 | 780 | 790 | 2 82 0 | 29 | 1020 | 1130 | 1200 | 2020 |
| UL-94 flame retardancy | | | V-0 | V-0 | V-0 | V-0 | V-0 | Totally burnt | Totally burnt | V-1 | Uncured | V-0 |

As shown in Table 1, the addition-curable silicone composition comprising 1,2,3-benzotriazole and no talc fine powder failed to provide improved flame retardancy and the obtained silicone rubber totally burned in the flame retardancy test (Comparative Examples 1 and 2). The addition-curable silicone composition comprising talc fine powder and no 1,2,3-benzotriazole was insufficient to provide improved flame retardancy, so that the silicone rubber did not show a flame retardancy of V-0 according to the UL94 Standards (Comparative Example 3). The composition of Comparative Example 5, in which aluminum hydroxide fine powder was blended instead of the talc fine powder, made the viscosity increase over time and the storage stability was inferior.

In contrast, the silicone compositions according to the present invention were excellent in storage stability over time, and provide silicone rubbers having the excellent flame retardancy of V-0 according to the UL94 Standards on account of the combination of a talc fine powder as described herein above with 1,2,3-benzotriazole, or a derivative thereof.

### Industrial Applicability

The addition-curable silicone composition of the present invention has excellent storage stability and provides a silicone rubber having excellent flame retardancy. The silicone composition is useful in electrical appliances, cable terminal components, and automotive materials, which require flame retardancy.

## Claims

1. An addition-curable silicone composition comprising the following components (A) to (E):
(A) 100 parts by mass of an organopolysiloxane having two or more alkenyl groups each bonded to a silicon atom and being liquid at 25 degrees C,
(B) an organohydrogenpolysiloxane having two or more hydrogen atoms each bonded to a silicon atom in an amount such that the number of the hydrogen atoms each bonded to a silicon atom in component (B) is 1 to 10 per the alkenyl group bonded to a silicon atom in component (A),
(C) a platinum group metal catalyst in a catalytic amount,
(D) 10 to 100 parts by mass of talc fine powder having a median diameter of 0.1 to 50 µm, as determined according to a laser diffraction method, and
(E) 1,2,3-benzotriazole, or a derivative thereof, in an amount of 2 to 500 moles per mole of the platinum group metal atom of component (C) .

2. The addition-curable silicone composition according to claim 1, wherein the talc fine powder is surface-treated with an organosilicon compound.

3. The addition-curable silicone composition according to claim 1 or claim 2, further comprising 1 to 100 parts by mass of a reinforcing filler (F).

4. The addition-curable silicone composition according to claim 3, wherein component (F) is fumed silica having a specific surface area of 50 m²/g or more, as determined by a BET method.

5. Silicone rubber obtained by curing the addition-curable silicone composition according to any one of claims 1 to 4.

6. The silicone rubber according to claim 5, wherein the silicone rubber has a flame retardancy of V-0 according to the UL94 Standards at a thickness of 0.5 mm or more.

## Patentansprüche

1. Durch Addition härtbare Silikonzusammensetzung, umfassend die folgenden Komponenten (A) bis (E):
(A) 100 Gewichtsteile eines Organopolysiloxans, das zwei oder mehr Alkenylgruppen hat, jede an ein Siliziumatom gebunden, und bei 25 °C flüssig,
(B) ein Organohydrogenpolysiloxan, das zwei oder mehr Wasserstoffatome hat, jedes an ein Siliziumatom in einer Menge gebunden, so dass die Anzahl der Wasserstoffatome, die jeweils an ein Siliziumatom in Komponente (B) gebunden ist, 1 bis 10 pro Alkenylgruppe ist, gebunden an ein Siliziumatom in Komponente (A),
(C) einen Metallkatalysator der Platingruppe in einer katalytischen Menge,
(D) 10 bis 100 Gewichtsteile feines Talkumpulver, das einen mittleren Durchmesser von 0,1 bis 50 µm hat, wie nach einem Laserbeugungsverfahren bestimmt, und
(E) 1,2,3-Benzotriazol oder ein Derivat davon in einer Menge von 2 bis 500 Mol pro Mol des Platingruppen-Metallatoms der Komponente (C).

2. Durch Addition härtbare Silikonzusammensetzung nach Anspruch 1, wobei das feine Talkumpulver mit einer Organosiliziumverbindung oberflächenbehandelt ist.

3. Durch Addition härtbare Silikonzusammensetzung nach Anspruch 1 oder Anspruch 2, ferner umfassend 1 bis 100 Gewichtsteile eines verstärkenden Füllstoffs (F).

4. Durch Addition härtbare Silikonzusammensetzung nach Anspruch 3, wobei Komponente (F) pyrogene Kieselsäure ist, die eine spezifische Oberfläche von 50 m²/g oder mehr hat, wie durch ein BET-Verfahren bestimmt.

5. Silikonkautschuk, erhalten durch Härten der durch Addition härtbaren Silikonzusammensetzung nach einem der Ansprüche 1 bis 4.

6. Silikonkautschuk nach Anspruch 5, wobei der Silikonkautschuk einen Flammschutz von V-0 nach den UL94-Standards bei einer Dicke von 0,5 mm oder mehr aufweist.

## Revendications

1. Composition de silicone durcissable par addition comprenant les composants (A) à (E) suivants :
(A) 100 parties en masse d'un organopolysiloxane ayant deux ou plus de deux groupes alcényle liés chacun à un atome de silicium et qui est liquide à 25°C,
(B) un organohydrogénopolysiloxane ayant deux ou plus de deux atomes d'hydrogène liés chacun à un atome de silicium en une quantité telle que le nombre d'atomes d'hydrogène liés chacun à un atome de silicium dans le composant (B) soit de 1 à 10 par groupe alcényle lié à un atome de silicium dans le composant (A),
(C) un catalyseur métallique du groupe du platine en une quantité catalytique,
(D) 10 à 100 parties en masse de poudre fine de talc ayant un diamètre médian de 0,1 à 50 µm, tel que déterminé conformément à un procédé par diffraction de laser, et
(E) du 1,2,3-benzotriazole, ou un dérivé de celui-ci, en une quantité de 2 à 500 moles par mole de l'atome de métal du groupe du platine du composant (C).

2. Composition de silicone durcissable par addition selon la revendication 1, dans laquelle la poudre fine de talc est traitée en surface avec un composé organique du silicium.

3. Composition de silicone durcissable par addition selon la revendication 1 ou 2, comprenant en outre 1 à 100 parties en masse d'une charge de renforcement (F).

4. Composition de silicone durcissable par addition selon la revendication 3, dans laquelle le composant (F) est une silice fumée ayant une surface spécifique de 50 m²/g ou plus, telle que déterminée par un procédé BET.

5. Caoutchouc de silicone obtenu par durcissement de la composition de silicone durcissable par addition de l'une quelconque des revendications 1 à 4.

6. Caoutchouc de silicone selon la revendication 5, lequel caoutchouc de silicone a une résistance au feu de V-0 conformément aux normes UL94 pour une épaisseur de 0,5 mm ou plus.
